(19) Europäisches Patentamt
European Patent Office
Office européen des brevets

(11) EP 3 660 069 B1

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(21) Anmeldenummer: **18209073.8**

(22) Anmeldetag: **29.11.2018**

(51) Internationale Patentklassifikation (IPC):
***C08G 59/50*** $^{(2006.01)}$ ***C08G 59/56*** $^{(2006.01)}$

(52) Gemeinsame Patentklassifikation (CPC):
**C08G 59/5073; C08G 59/5046; C08G 59/508; C08G 59/56**

(54) **SCHNELL HÄRTENDE EPOXYSYSTEME**

FAST CURING EPOXY SYSTEMS

SYSTÈMES ÉPOXYDIQUES À DURCISSEMENT RAPIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.06.2020 Patentblatt 2020/23**

(73) Patentinhaber: **Evonik Operations GmbH**
**45128 Essen (DE)**

(72) Erfinder:
- **SPYROU, Emmanouil**
  **46514 Schermbeck (DE)**
- **FUCHMANN, Dirk**
  **45721 Haltern am See (DE)**
- **KOHLSTRUK, Britta**
  **45966 Gladbeck (DE)**
- **SANDKÜHLER, Annette**
  **45770 Marl (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 047 740**
**EP-A1- 3 569 629**
**EP-B1- 3 569 630**
**DE-A1-102009 028 019**
**US-A1- 2012 010 330**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Epoxidharze, insbesondere solche, die aus Bisphenol A und Epichlorhydrin hergestellt werden, sind bekannte Rohstoffe für die Herstellung qualitativ hochwertiger Gießharze, Beschichtungsmassen, Komposite und Klebstoffe. Mit Polyaminen gehärtete aromatische Epoxidharze besitzen neben guter Chemikalien- und Lösungsmittelbeständigkeit eine gute Haftfestigkeit auf vielen Untergründen.

Zur Beschleunigung der Härtung von Epoxy-Amin-Beschichtungssystemen können Katalysatoren eingesetzt werden (US 3,492,269 A, US 5,470,896 A, GB 1,105,772 A).

EP 0 083 813 A1, EP 2 957 584 A1, US 5,441,000 A, US 5,629,380 A, WO 96/09352 A1 offenbaren die katalysierte Härtung von Epoxyharzen mit verschiedenen Aminen.

CN 106905816 A, CN 106833261 A, JP H08-113876 A, DE 1 954 701 A1, CA 2 165 585 A1 und US 3,055,901 A offenbaren die katalysatorfreie Härtung von Epoxyharzen mit Aminoethylpiperazin.

EP 0 969 030 A1 offenbart Epoxy/Amin-Beschichtungssysteme, deren Aminkomponente ein aliphatisches Amin ist. Die Zusammensetzungen können einen Katalysator aufweisen. In den Beispielen wird weiterhin als Härter Aminoethylpiperazin eingesetzt.

US 4,775,734 A offenbart die Härtung von Epoxyharzen mit u.a. Aminoethylpiperazin, Bis(aminopropyl)piperazin oder Piperidin unter Verwendung katalytischer Mengen von Tetrafluoroborat- oder Hexafluorophosphat-Salzen verschiedener Amine.

EP 3 255 078 A1 offenbart Epoxidharzzusammensetzungen umfassend mindestens eine Epoxidverbindung, 2-(2,2,6,6-tetramethylpiperidin-4-yl)propan-1,3-diamin, und optional einen Katalysator, bei dem es sich unter anderem um ein anorganisches Salz handeln kann.

Es hat sich herausgestellt, dass mit Aminen mit mindestens zwei sekundären Aminogruppen, die beide Bestandteil eines organischen Ringsystems sind, Epoxyharzzusammensetzungen besonders schnell ausgehärtet werden können.

US 8,951,619 B2 und US 9,006,385 B2 u.a. die katalysatorfreie Härtung von Epoxyharzen mit u.a. unsubstituierten Piperazinen.

WO 2017/074810 A1 offenbart Zusammensetzungen umfassend ein Epoxyharz, ein Polyetheramin und einen weiteren Aminhärter, bei dem es sich unter anderem um ein Imidazol oder Imidazolin handeln kann. Es wird weiterhin ein Metalltriflat-Katalysator eingesetzt.

Die bislang nicht offen gelegte EP 18172950.0 offenbart eine alkylphenolarme Zusammensetzung umfassend mindestens ein Epoxyharz, mindestens ein Amin mit mindestens zwei sekundären Aminogruppen, die beide Bestandteil eines organischen Ringsystems sind, und mindestens ein Salz einer starken Brönstedt-Säure. Die bislang nicht offengelegte EP 18172954.2 offenbart eine alkylphenolarme Zusammensetzung umfassend mindestens ein Epoxyharz, mindestens ein Amin mit mindestens zwei sekundären Aminogruppen, die beide Bestandteil eines organischen Ringsystems sind, und mindestens ein Salz einer sehr starken Brönstedt-Säure.

US 2012/0010330 A1 offenbart die Härtung eines Epoxyharzes mit u.a. einem cyclischen Diamin ausgewählt aus Piperazin oder Homopiperazin in Gegenwart mindestens 10 % eines Alkylphenoles, um die Reaktivität der Zusammensetzung zu erhöhen und den Glasübergangspunkt Tg herabzusenken (Alkylphenol wirkt als Weichmacher). Nachteilig am Einsatz von phenolhaltigen Zusatzstoffen ist jedoch ihre allergene Wirkung und ihre Toxizität. EP1047740A1 offenbart eine Beschichtungszusammensetzung, umfassend ein Epoxyharz, ein aminfunktionelles Härtungsmittel und ein antikorrosives Pigment.

Den Zusammensetzungen des Standes der Technik ist gemein, dass sie zu langsam oder nur bei hohen Temperaturen aushärten und somit nicht reaktiv genug sind.

Für viele Anwendungen ist es jedoch wichtig, dass eine Oberflächenhärtung oder die vollständige Durchhärtung besonders schnell oder aber bei niedrigen Temperaturen abläuft. Ersteres kann die Produktivität erhöhen oder aber den nächsten Verarbeitungsschritt beschleunigen. Letzteres ist vor allem in kalten Gegenden wichtig, um beispielsweise Schiffe oder Pipelines mit einem Korrosionsschutzüberzug zu versehen, so dass dort auch im Winter weitergearbeitet werden kann.

Es stellt sich vorliegend somit die Aufgabe Epoxysysteme bereitzustellen, die unter gleichen Bedingungen deutlich schneller reagieren als die bisher bekannten Formulierungen und die eine niedrige Glasübergangstemperatur Tg aufweisen. Auch stellt sich die Aufgabe, Epoxyformulierungen bereitzustellen, die bei Temperaturen deutlich unterhalb von Raumtemperatur schneller als bislang möglich an- bzw. aushärten. Weiter wünschenswert wäre es, wenn sie möglichst frei von toxischen und allergenen Zusätzen wären.

Diese sich vorliegend stellenden Aufgaben werden gelöst durch die erfindungsgemäßen Zusammensetzungen umfassend

a) mindestens ein Epoxyharz,
b) mindestens ein cyclisches Amin mit mindestens zwei sekundären Aminogruppen, die beide Bestandteil eines

organischen Ringsystems sind, und

c) mindestens einen ggf. mit mindestens einem aromatischen Rest und/oder mit mindestens einem Alkenylrest substituierten Alkylalkohol, wobei der Beitrag des Alkohols zur Gesamtkonzentration an OH-Gruppen mindestens 1,3 Mol/l beträgt.

Bevorzugt enthält die Zusammensetzung weniger als 5 Gew.-%, weiter bevorzugt weniger als 3 Gew.-%, bezogen auf die Gesamtmasse der Zusammensetzung an substituierten oder unsubstituierten Phenolen. Weiter bevorzugt sind die erfindungsgemäßen Zusammensetzungen weiterhin phenolfrei, d.h. sie enthalten keine Phenole und substituierten Phenole. Unter substituierten Phenolen sind dabei strukturell von Phenol abgeleitete Verbindungen zu verstehen. Insbesondere enthalten die erfindungsgemäßen Zusammensetzungen bevorzugt keine alkylierten Phenole. Entsprechende phenolarme bzw. phenolfreie Zusammensetzungen haben den Vorteil, wenig toxisch und allergen zu sein

Bei der **Komponente a)** handelt es sich um mindestens ein Epoxyharz. Prinzipiell sind dafür alle Epoxidverbindungen geeignet.

Geeignete Epoxidverbindungen werden z. B. in EP 675 185 A2 beschrieben. Es kommt eine Vielzahl der bekannten Verbindungen in Betracht, die mehr als eine Epoxidgruppe, vorzugsweise zwei Epoxidgruppen, pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten oder Ethergruppierungen.

Bevorzugte Epoxidverbindungen sind dabei Glycidylether, die sich von mehrwertigen Phenolen, insbesondere Bisphenolen sowie Novolaken ableiten und deren Molmassen bezogen auf die Anzahl der Epoxidgruppen ME ("Epoxidäquivalentgewichte", "EV-Wert") zwischen 100 und 1500 g/val, insbesondere jedoch zwischen 150 und 250 g/val, liegen.

Besonders bevorzugte Epoxidverbindungen leiten sich ab von Resorcin, Hydrochinon, 2,2-Bis-(4-hydroxyphenyl)-propan (Bisphenol A), Isomerengemischen des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl, 4,4'-Dihydroxybenzophenon, Bis-(4-hydroxyphenyl)-1,1-ethan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon, sowie den Chlorierungs- und Bromierungsprodukten der vorstehend genannten Verbindungen (wie beispielsweise TetrabromBisphenol A).

Ganz besonders bevorzugt werden flüssige Diglycidylether auf Basis von Bisphenol A und Bisphenol F mit einem Epoxidäquivalentgewicht von 150 bis 200 g/val eingesetzt.

Bevorzugt können auch Polyglycidylether von Polyalkoholen verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (auch Neopentylglykoldiglycidylether), Hexandioldiglycidylether, Diethylenglykoldiglycidylether, Dipropylenglykoldiglycidylether, höhere Polyoxyalkylenglykoldiglycidylether, wie z. B. höhere Polyoxyethylenglykoldiglycidylether und glykoldiglycidylether, Mischpolyoxyethylen-propylenglykoldiglycidylether, Polyoxytetramethylenglykoldiglycidylether, Polyglycidylether des Glycerins, des 1,2,6-Hexantriols, Trimethylolpropans, Trimethylolethans, Pentaerythrits, Sorbitols, Polyglycidylether von oxalkylierten Polyolen (wie z. B. des Glycerins, Trimethylolpropans, Pentaerythrits u. a.), Diglydicylether des Cyclohexandimethanols, Bis-(4-hydroxycyclohexyl)methans und 2,2-Bis-(4-hydroxy-cyclohexyl)propans, Polyglycidylether des Rizinusöls, Triglycidyltris-(2-hydroxy-äthyl)-isocyanurat.

Weiterhin kommen bevorzugt als Komponente A) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen.

Weiterhin können bevorzugt auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien bevorzugt genannt Glycidylester ungesättigter Carbonsäuren und epoxidierte Ester von ungesättigten Alkoholen bzw. ungesättigten Carbonsäuren. Zusätzlich zu den Polyglycidylethern können geringe Mengen von Monoepoxiden wie z. B. Methylglycidylether, Butylglycidylether, Allylglycidylether, Äthylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12 bis C13 Alkoholen, Phenylglycidylether, Kresylglycidylether, p-t-Butylphenylglycidylethers, p-Octylphenylglycidylether, p-Phenylphenylglycidylether, Glycidylether eines oxalkylierten Laurylalkohols sowie Monoepoxide wie beispielsweise epoxidierte einfach ungesättigte Kohlenwasserstoffe

(Butylen-, Cyclohexen-, Styroloxid) in Massenanteilen bis zu 30 Gew.-%, vorzugsweise 10 bis 20 Gew.-%, bezogen auf die Masse der Polyglycidylether mitverwendet werden.

Eine ausführliche Aufzählung der geeigneten Epoxyverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Als Epoxyverbindungen kommen dabei bevorzugt Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.

Es können auch Mischungen der genannten Epoxyverbindungen eingesetzt werden.

Besonders bevorzugte Epoxyharze sind Polyepoxide auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester.

Bevorzugt werden Mischungen der vorgenannten Epoxyverbindungen als Komponente A) eingesetzt.

Als **Amine b)** mit mindestens zwei sekundären Aminogruppen, die beide Bestandteil eines organischen Ringsystems sind, kommen prinzipiell alle Verbindungen in Frage, die mindestens zwei sekundäre cyclische Aminogruppen aufweisen. Darüber hinaus können die Amine b) als NH-Träger noch weitere primäre oder nicht-cyclische sekundäre Aminogruppen aufweisen. Bevorzugt weisen die in den erfindungsgemäßen Zusammensetzungen eingesetzten Aminen jedoch keine weiteren primären oder nicht-cyclischen sekundären Aminogruppen auf, d.h. sie weisen ausschließlich mindestens zwei sekundäre Aminogruppen auf, die Bestandteil eines organischen Ringsystems sind. Darüber hinaus können die erfindungsgemäß eingesetzten Amine jedoch natürlich noch tertiäre Aminogruppen aufweisen, die nicht reaktiv sind.

Unter einem "organischen Ringsystem" ist ein heterocyclisches System zu verstehen, das einen, zwei oder mindestens drei (ggf. mit nicht Stickstoff enthaltenden Heterocyclen oder Nicht-Heterocyclen annellierte) stickstoffhaltige Heterocyclen aufweisen kann. Das organische Ringsystem kann dabei auch in den stickstoffhaltigen Cyclen andere Heteroatome als Stickstoff, insbesondere Sauerstoff, Schwefel und/oder Phosphor, aufweisen. Unter "einem" stickstoffhaltigen Cyclus ist dabei vorliegend ein einfacher stickstoffhaltiger Cyclus oder ein einfacher stickstoffhaltiger Cyclus, der mit einem nichtstickstoffhaltigen Heterocyclus, einem Cycloalkan, einem Cycloalken oder einem aromatischen Kohlenwasserstoff eine Ringbindung teilt (d.h., ein stickstoffhaltiger Cyclus, an den ggf. ein nichtstickstoffhaltiger Heterocyclus, ein Cycloalkan, ein Cycloalken oder ein aromatischer Kohlenwasserstoff annelliert ist), zu verstehen.

Bei den Aminen mit mindestens zwei sekundären Aminogruppen kann es sich auch um auch entsprechende Umsetzungsprodukte von Verbindungen mit sekundären cyclischen Aminogruppen und optional weiteren primären oder nicht-cyclischen sekundären Aminogruppen mit gegenüber NH-Gruppen reaktiven Gruppen, insbesondere Mono- und Polyepoxiden (Addukten), Polyisocyanaten, Polycarbodiimiden, Phenolen (Mannichreaktionen mit Aldehyden und Ketonen), und substituierten Phenolen (Austausch der Mannichbase), Polyestern, Polycarbonsäuren, Polyacrylaten und Polymethacrylaten handeln.

In einer bevorzugten Ausführungsform handelt es sich bei den Aminen b) um Amine, die mindestens zwei sekundäre cyclische Aminogruppen aufweisen, von denen mindestens zwei unterschiedlichen Cyclen angehören. Besonders bevorzugt handelt es sich bei den Aminen b) um Amine, die zwei bis vier sekundäre cyclische Aminogruppen an zwei bis vier unterschiedlichen Cyclen aufweisen. Unter entsprechenden Aminen mit mindestens zwei unterschiedlichen Cyclen sind bevorzugt auch kondensierte Heterocyclen aus mindestens zwei einfachen Heterocyclen zu verstehen.

Ganz besonders bevorzugt gehören die mindestens zwei sekundären cyclischen Aminogruppen demselben Cyclus an.

Noch weiter bevorzugte Amine b) weisen die Formel (I) auf

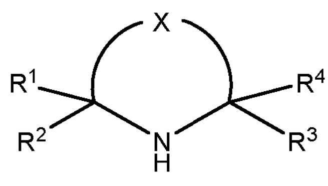,

(I)

in der

- $R^1$ bis $R^4$ für H oder organischen Rest steht, und
-

$$X = -(Y^1)_m-(A^1)_n-(Y^2)_o-(A^1)_p-(Y^3)_q-(A^1)_r-(Y^1)_s, \qquad (II)$$

wobei unabhängig voneinander

  - o m, n, o, p, q, r und s = 0 oder 1,
  - ◦ $A^1$, $A^2$, $A^3$ = Alkylen- oder Alkenylenrest und
  - o $Y^1$, $Y^2$, $Y^3$, $Y^4$ = $NR^5$, $PR^5$, O oder S, mit $R^5$ unabhängig voneinander = H oder organischer Rest,
  - o wobei jeweils zwei organische Reste ausgewählt aus $R^1$ bis $R^5$ und ggf. anwesenden Resten der Alkylen- und/oder Alkenylenreste $A^1$, $A^2$, $A^3$ auch einen oder mehrere weitere Ringe bilden können,

- mit der Maßgabe, dass mindestens einer der vorhandenen Reste ausgewählt aus $Y^1$, $Y^2$, $Y^3$, $Y^4$ gleich $NR^5$ mit $R^5$ = H ist.

Die cyclischen Amine sind in Bezug auf den dargestellten Ring in Formel (I) gesättigt oder zum Teil ungesättigt. Entsprechende Amine reagieren schneller als nicht unter die Formel fallende aromatische Amine und Imidazoline. Optional weitere anwesende Ringe im cyclischen Amin können nicht nur gesättigt oder ungesättigt, sondern auch aromatisch sein. Bevorzugt sind die optional weiteren anwesenden Ringe im cyclischen System nicht-aromatische, d.h. gesättigte oder ungesättigte.

Bevorzugte cyclische Amine sind in Bezug auf den dargestellten Ring in Formel (I) gesättigt.

Bevorzugt ist mindestens einer der der ringständigen Aminogruppe benachbarten Kohlenstoffatome = H, d.h. mindestens einer der Reste $R^1$, $R^2$, $R^3$ und $R^4$ = H. Weiter bevorzugt sind mindestens zwei der Reste $R^1$, $R^2$, $R^3$ und $R^4$ = H ist. Bevorzugt sind mindestens drei, besonders bevorzugt alle der Reste $R^1$, $R^2$, $R^3$ und $R^4$ = H. Entsprechend unsubstituierte Amine reagieren schneller als andere Amine.

Im Rest X sind, wenn vorhanden, $A^1$, $A^2$ und $A^3$ unabhängig voneinander Alkylen- oder Alkenylenreste. Diese können wiederum organische Reste tragen. Weisen die Alkylen- und/oder Alkenylenreste selbst einen oder mehrere organische Reste auf, können jeweils zwei organische Reste ausgewählt aus den organischen Resten der Alkylen- und/oder Alkenylenreste auch miteinander oder mit ggf. vorhandenen organischen Resten $R^1$ bis $R^5$ einen oder mehrere weitere Ringe bilden.

Vorhandene Reste ausgewählt aus $R^1$ bis $R^5$ und ggf. anwesenden Resten der Alkylen- und/oder Alkenylenreste $A^1$, $A^2$, $A^3$ können mit mindestens einer Gruppe $-NHR^6$ oder $-NH_2$ substituiert ist, wobei $R^6$ = organischer Rest. Das heißt, auch in Formel (I) können neben den mindestens zwei cyclischen Aminogruppen auch noch weitere primäre oder nicht-cyclische sekundäre Aminogruppen vorhanden sein.

Bevorzugt weisen $A^1$, $A^2$ und $A^3$ jeweils, wenn vorhanden, unabhängig voneinander die Formel (III) auf,

$$-(CR^7R^8)_x-(CR^9{=}CR^{10})_y-(CR^{11}R^{12})_z- \qquad (III)$$

in der unabhängig von einander

- $R^7$, $R^8$, $R^9$, $R^{10}$, $R^{11}$ und $R^{12}$ = H oder organischer Rest und

$$1 \leq x + y + z \leq 7$$

ist.

Die Indices x, y und z können entsprechend Ihrer Zugehörigkeit zum Rest $A^1$, $A^2$ und $A^3$ bevorzugt auch als Indices $x^1$, $y^1$ und $z^1$, als $x^2$, $y^2$ und $z^2$ und als $x^3$, $y^3$ und $z^3$ bezeichnet werden.

Bevorzugt weist X eine Kettenlänge von 2 bis 15 Atomen auf. Bevorzugt beträgt somit die Summe aus allen x, ½·y und z sowie aus m, o, q und s einen Wert zwischen 2 und 15, weiter bevorzugt einen Wert zwischen 2 und 8, noch weiter bevorzugt einen Wert zwischen 2 und 5 und ganz besonders bevorzugt einen Wert zwischen 2 und 4. Anders ausgedrückt, ist bevorzugt $2 \leq m + o + q + s + x^1 + ½·y^1 + z^1 + x^2 + ½·y^2 + z^2 + x^3 + ½·y^3 + z^3 \leq 15$. Weiter bevorzugt ist $2 \leq m + o + q + s + x^1 + ½·y^1 + z^1 + x^2 + ½·y^2 + z^2 + x^3 + ½·y^3 + z^3 \leq 8$, weiter bevorzugt $2 \leq m + o + q + s + x^1 + ½·y^1 + z^1 + x^2 + ½·y^2 + z^2 + x^3 + ½·y^3 + z^3 \leq 5$, ganz besonders bevorzugt $2 \leq m + o + q + s + x^1 + ½·y^1 + z^1 + x^2 + ½·y^2 + z^2 + x^3 + ½·y^3 + z^3 \leq 4$.

Bei den Aminen der Formel (I) handelt es sich um (ggf. bi-/poly)cyclische Verbindungen, da beide zur Aminogruppe benachbarten Kohlenstoffatome beidseitig an den substituierten (Hetero)Alkylenrest der Formel (II) angebunden sind.

Weiter bevorzugt weist Formel (I) neben dem Stickstoffatom der ringständigen NH-Gruppe maximal ein weiteres Heteroatom im Zyklus auf, d.h. X hat bevorzugt die Formel (IIa)

$$X = -(CR^7R^8)_x-(Y)_o-(CR^{11}R^{12})_z- \qquad \text{(IIa)}$$

mit

- x und z = 0, 1, 2, 3, 4, 5, 6 oder 7,
- o = 1,

$$2 \leq x + o + z \leq 15$$

- $R^7$, $R^8$, $R^{11}$, $R^{12}$ = H oder organischer Rest und
- Y = NH.

Ganz besonders bevorzugt ist in Formel (IIa) x = z = 1.

Entsprechend gilt dann, dass in Formel (I) jeweils zwei organische Reste ausgewählt aus $R^1$ bis $R^8$, $R^{11}$ und $R^{12}$ auch einen oder mehrere weitere Ringe bilden können.

Die Reste $R^1$, $R^2$, $R^3$, $R^4$, $R^5$, $R^6$, $R^7$, $R^8$, $R^9$, $R^{10}$, $R^{11}$ und $R^{12}$ können organische Reste sein. Bevorzugte organische Reste sind Alkyl-, Alkenyl-, Alkinyl-, Aryl- oder Aralkylreste. Diese können innerhalb ihrer Kette heteratomsubstituiert sein und/oder Substituenten tragen. Bevorzugte organische Reste sind Alkyl-, Alkenyl-, Alkinyl-, Aryl- oder Aralkylreste, die innerhalb der Kette eine oder mehrere Ether-, Carboxy-, Amino-, Amido-, Harnstoff-, Carbamat-, Carbonat-, Amidino- oder Guanidinogruppen tragen können. Weiterhin können bevorzugte organische Reste einen oder mehrere Substituenten ausgewählt aus organischen Resten, optional mit Ether-, Carboxy-, Amino-, Amido-, Harnstoff-, Carbamat-, Carbonat-, Amidino- oder Guanidinogruppen, die ggf. auch mit Hydroxy-, Nitril- oder Halogenresten substituiert sein oder selbst Hydroxy-, Nitril- oder Halogenreste sein können.

Besonders bevorzugte Amine b) sind ausgewählt aus der Gruppe bestehend aus 3,7-Diazabicyclo[4.3.0]nonan, 2,8-Diazabicyclo[4.3.0]nonan, 2-Phenyl-2-imidazolin, 3,8-Diazabicyclo[3.2.1]octan, 2,2'-Bisimidazolidine, 1H- Octahydro-imidazo[4,5-c]pyridin, 1,4,8-Triazaspiro[4.5]decan, 1,4-Diazaspiro[4.5]decan, Pyrazolidin, 2,2-Dimethylimidazolidin, 1,4,7-Triazacyclononan, Decahydro-2,6-dimethylpyrazino[2,3-b]pyrazin, Hexahydropyridazine, Decahydro-4a,8a-dimethylpyrazino[2,3-b]pyrazin, 4,4'-Methylenebis[piperidin], 2,2'-Methylenebis[piperidin], Tetradecahydro-4,7-phenanthrolin, 2,2'-Bipiperidin, 4,4'-Bipiperidin, Tetradecahydrophenazin, Decahydrochinoxalin, 1,5-Decahydronaphthyridin, Octahydro-1H-cyclopentapyrazin, 2,2'-Bipyrrolidin, Piperazin, 2-Methylpiperazin, 2,2-Dimethylpiperazin, 2,3-Dimethylpiperazin, 2-Ethylpiperazin, 2,5-Dimethylpiperazin, 2,6-Dimethylpiperazin, 2,6-Diazabicyclo[3.3.0]octan, 3,7-Diazabicyclo[3.3.0]octan, 2,3,5,6-Tetramethylpiperazin, 2,3,5-Trimethylpiperazin, 2,2'-Bipiperidin, 2-(2-Piperidinyl)-piperazin, 2,2'-Bimorpholin, Decahydro-2,6-naphthyridin, Decahydro-2,7-naphthyridin, Homopiperazin, 2-Methylhomopiperazin, 6-Methyl-1,4-diazepan, Bis[2-(piperazin-1-yl)ethyl]amine, 1,2-Dipiperazinoethan, 1,3-Bis(4-piperidyl)propan und N-(4-piperidinylmethyl)-4-Piperidinemethanamin.

Ganz besonders bevorzugt ist das Amin b) Homopiperazin.

Ggf. mit mindestens einem aromatischen Rest und/oder mindestens einem Alkenylrest substituierte Alkylalkohole C) (im Folgenden als "Alkohole" bezeichnet) sind Verbindungen mit mindestens einer OH-Gruppe, die alkylisch gebunden ist. Somit weisen die Alkohole C) eine Alkylgruppe auf, die mindestens eine OH-Gruppe trägt. Der Alkylalkohol kann ausschließlich aus Alkylgruppe und OH-Gruppe(n) bestehen. Alternativ kann der Alkylalkohol auch Alkylgruppen aufweisen, die mit mindestens einem aromatischen Rest und/oder mindestens einem Alkenylrest substituiert sind. Bevorzugt sind Alkohole mit nur einer OH-Gruppe, d.h. Monoalkohole, insbesondere solche ausgewählt aus der Gruppe bestehend aus Methanol, Ethanol, Propanol, Butanol, Benzylalkohol, substituierten Benzylalkoholen und Umsetzungsprodukten von Benzylalkohol mit Ethylenoxid oder Propylenoxid. Es können jedoch vorteilhaft auch Polyalkohole eingesetzt werden, insbesondere solche ausgewählt aus der Gruppe bestehend aus Ethylenglykol, Propylenglykol, Polyethylenglykolen, Polypropylenglykolen, Polyesterpolyalkoholen, Polyetherpolyalkoholen, Polycarbonatpolyalkoholen, Polycaprolactonpolyalkoholen und Polyacrylatpolyalkoholen.

Bevorzugte Alkohole sind bei Raumtemperatur flüssig. Besonders bevorzugte Alkohole haben einen Siedepunkt von mindestens 200 °C bei 1013 mbar.

Ganz besonders bevorzugt ist der Alkohol Benzylalkohol.

Die Komponente C liegt in einer solchen Menge vor, dass der Beitrag dieses Alkohols zur Gesamtkonzentration an OH-Gruppen mindestens 1,3 Mol/l, bevorzugt mindestens 1,4 Mol/l beträgt. Weiter bevorzugt der Beitrag dieses

Alkohols zur Gesamtkonzentration an OH-Gruppen mindestens 1,5 Mol/l und ganz besonders bevorzugt mindestens 1,6 Mol/l und noch weiter bevorzugt mindestens 1,8 Mol/l. Die entsprechende Konzentration ist dabei aus der entsprechenden Einwaage abzuleiten.

Bevorzugt beträgt der Anteil des Alkohols, insbesondere des Benzylalkohols, mindestens von 20 Gew.-%, besonders bevorzugt mindestens 30 Gew.-%, und ganz besonders bevorzugt mindestens 40 Gew.-% an der Gesamtformulierung.

Bevorzugt können die erfindungsgemäßen Zusammensetzungen weiterhin d) Amine, die nicht mindestens zwei sekundäre Aminogruppen als Bestandteil eines organischen Ringsystems aufweisen, und/oder e) weitere Hilfs- oder Zusatzstoffe aufweisen.

Solche Amine d) sind bevorzugt Di- oder Polyamine. Diese können monomere, oligomere und/oder polymere Verbindungen sein. Bevorzugte monomere und oligomere Verbindungen sind ausgewählt aus der Gruppe bestehend aus Diaminen, Triaminen und Tetraminen. Die Amingruppe der Di- oder Polyamine d) kann an ein primäres, sekundäres oder tertiäres Kohlenstoffatom angebunden sein, bevorzugt an ein primäres oder sekundäres Kohlenstoffatom. Es können auch Mischungen von Di- und/oder Polyaminen als Komponente d) eingesetzt werden.

Als Komponente d) können bevorzugt die folgenden Amine allein oder in Mischungen eingesetzt werden:

- aliphatische Amine, insbesondere Polyalkylenpolyamine, bevorzugt ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, Diethylentriamin, Triethylentetramin, Pentaethylenhexamin, Trimethylhexamethylendiamin, 2,2,4-Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N''-1,2-Ethandiylbis-(1,3-propandiamin), Dipropylentriamin, Adipinsäuredihydrazid und Hydrazin;
- Oxyalkylenpolyamine, bevorzugt ausgewählt aus Polyoxypropylendiamin und Polyoxypropylentriamin (z. B. Jeffamine® D-230, Jeffamine® D-400, Jeffamine® T-403, Jeffamine® T-5000), 1,13-Diamino-4,7,10-trioxatridecan, 4,7-Dioxadecan-1,10-diamin;
- cycloaliphatische Amine, bevorzugt ausgewählt aus Isophorondiamin (3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, TCD-Diamin (3(4), 8(9)-Bis(aminomethyl)-tricyclo[5.2.1.02,6]decan), 4-Methylcyclohexan-1,3-diamin,
- Amine mit einer cyclischen Aminogruppe und mindestens einer nichtcyclischen primären oder sekundären Aminogruppe, bevorzugt 1-(3-Aminoethyl)piperazin (AEP), 1-(3-Aminopropyl)piperazin;
- araliphatische Amine, bevorzugt Xylylendiamine;
- aromatische Amine, bevorzugt Phenylendiamine, insbesondere 1,3-Phenylendiamin und 1,4-Phenylendiamin, und 4,4'-Diaminodiphenylmethan, 2,4'-Diaminodiphenylmethan, 2,2'-Diaminodiphenylmethan, ggf. allein oder in Mischungen der Isomeren;
- Adukthärter, insbesondere Umsetzungsprodukte von Epoxidverbindungen, insbesondere Glycidylether des Bisphenol A und F, mit überschüssigem Amin;
- Polyamidoaminhärter, insbesondere durch Kondensation von Mono- und Polycarbonsäuren mit Polyaminen erhaltene Polyamidoaminhärter, ganz insbesondere durch Kondensation von Dimerfettsäuren mit Polyalkylenpolyaminen;
- Mannichbasenhärter, insbesondere durch Umsetzung von ein- oder mehrwertigen Phenolen mit Aldehyden, insbesondere Formaldehyd, und Polyaminen, Mannichbasenhärter; und
- Mannichbasen, insbesondere auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol, Phenalkamine, die in einer Mannichreaktion aus Cardanolen, Aldehyden und Aminen gewonnen werden.

Es können auch Mischungen der vorab genannten Di- oder Polyamine als Komponente d) eingesetzt werden.

Bevorzugte weitere Hilfs- und Zuschlagsstoffe e) können die in der Epoxychemie üblichen Verbindungen sein. Bevorzugte Hilfs- und Zuschlagsstoffe e) sind Pigmente, Lösemittel, Verlaufsmittel, Modifikatoren, Entgasungsmittel, Mattierungsmittel, Reaktivverdünner, sowie Katalysatoren, wie z.B. Salizylsäure.

In einer bevorzugten Ausführungsform werden keine Amine d) eingesetzt. In einer bevorzugten Ausführungsform sind keine weiteren Modifikatoren enthalten. In einer bevorzugten Ausführungsform werden keine Katalysatoren eingesetzt. Ganz besonders bevorzugt sind die möglichen Hilfs- und Zuschlagsstoffe somit beschränkt auf Pigmente, Lösemittel, Verlaufsmittel, Entgasungsmittel, Mattierungsmittel und Reaktivverdünner.

Die Zusammensetzung der Komponenten a) bis e) in der erfindungsgemäßen Zusammensetzung beträgt bevorzugt die folgenden Gewichtsprozentanteile, bezogen auf die Gesamtmasse der Zusammensetzung:

a) Epoxyharz 30 - 89 %
b) cyclisches Amin 1 - 50 %
c) Alkohol 10 - 40 %,
d) weiteres Amin 0 - 59 % und
e) weitere Hilfs- oder Zusatzstoffe 0 - 59 %.

Bevorzugt beträgt weiterhin der Gewichtsprozentanteil der Amine b) bezogen auf die Gesamtmasse der Amine b) und d) mindestens 10 Gew.-%, besonders bevorzugt mindestens 30 %, ganz besonders bevorzugt mindestens 50 % und noch bevorzugter mindestens 70 %.

Gegenstand der Erfindung ist weiterhin ein Verfahren zur Herstellung einer erfindungsgemäßen Zusammensetzung, bei dem mindestens ein Epoxyharz a), mindestens ein cyclisches Amin b) und mindestens ein Alkohol c) miteinander vermischt wird.

Gegenstand der Erfindung ist weiterhin die Verwendung der erfindungsgemäßen Zusammensetzungen als Gießharz, Beschichtungsmasse, Komposit oder Klebstoff oder als Bestandteil davon.

**Experimenteller Teil:**

Beispiel 1 nicht gemäß der Erfindung

100 Teile Homopiperazin (Aldrich) werden mit 66 Teilen Benzylalkohol und 380 Teilen Epikote 828 (Epoxyäquivalent 190, Hexion) innigst vermischt und sofort danach ein DSC angefertigt.

Beispiel 2

100 Teile Homopiperazin (Aldrich) werden mit 400 Teilen Benzylalkohol und 380 Teilen Epikote 828 (Epoxyäquivalent 190, Hexion) innigst vermischt und sofort danach ein DSC angefertigt.

| **Rezeptur-Nr.** | | **1** | **2** |
|---|---|---|---|
| ***DSC-Analyse sofort*** | | | |
| Exothermer Peak | °C | 70 | 61 |
| **Onset** | **°C** | **32** | **24** |
| Exothermer Wärmestrom | J/g | 362 | 167 |
| **Tg max.** | **°C** | 58 | 63 |

Bei Beispiel 2 liegt sowohl der exotherme Peak niedriger, als auch der Onset dieses exothermen Peaks. Die Zusammensetzung gemäß Beispiel 2 ist also reaktiver als die gemäß Beispiel 1.

**Patentansprüche**

**1.** Zusammensetzung umfassend

a) mindestens ein Epoxyharz,
b) mindestens ein Amin mit mindestens zwei sekundären Aminogruppen, die beide Bestandteil eines organischen Ringsystems sind, und
c) mindestens einen ggf. mit mindestens einem aromatischen Rest und/oder mit mindestens einem Alkenylrest substituierten Alkylalkohol,

wobei der Beitrag des Alkohols zur Gesamtkonzentration an OH-Gruppen mindestens 1,3 Mol/l beträgt.

**2.** Zusammensetzung nach Anspruch 1,
**dadurch gekennzeichnet, dass**
das mindestens eine Epoxyharz ein Polyepoxid auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester ist.

3. Zusammensetzung nach Anspruch 1 oder 2, **dadurch gekennzeichnet, dass** alle der sekundären cyclischen Aminogruppen zu demselben Cyclus gehören.

4. Zusammensetzung nach Anspruch 3, **dadurch gekennzeichnet, dass** das Amin die Formel (I) aufweist

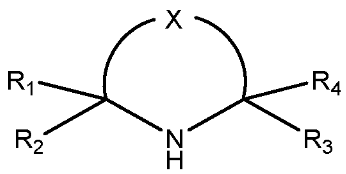

, (I)

in der

- in der $R^1$ bis $R^4$ für H oder organischen Rest steht, und
-

$$X = -(Y^1)_m-(A1)_n-(Y^2)_o-(A^2)_p-(Y^3)_q-(A^3)_r(Y^4)_s, \qquad (II)$$

wobei unabhängig voneinander

o m, n, o, p, q, r und s = 0 oder 1,
o $A^1$, $A^2$, $A^3$ = Alkylen- oder Alkenylenrest und
o $Y^1$, $Y^2$, $Y^3$, $Y^4$ = $NR^5$, $PR^5$, O oder S, mit $R^5$ unabhängig voneinander = H oder organischer Rest,
o wobei jeweils zwei organische Reste ausgewählt aus $R^1$ bis $R^5$ und ggf. anwesenden Resten der Alkylen- und/oder Alkenylenreste $A^1$, $A^2$, $A^3$ auch einen oder mehrere weitere Ringe bilden können,

- mit der Maßgabe, dass mindestens einer der vorhandenen Reste ausgewählt aus $Y^1$, $Y^2$, $Y^3$, $Y^4$ gleich $NR^5$ mit $R^5$ = H ist.

5. Zusammensetzung nach einem der vorhergehenden Ansprüche, **dadurch gekennzeichnet, dass** das Amin b) ausgewählt wird aus der Gruppe bestehend aus 3,7-Diazabicyclo[4.3.0]nonan, 2,8-Diazabicyclo[4.3.0]nonan, 2-Phenyl-2-imidazolin, 3,8-Diazabicyclo[3.2.1]octan, 2,2'-Bisimidazolidine, 1H- Octahydro-imidazo[4,5-c]pyridin, 1,4,8-Triazaspiro[4.5]decan, 1,4-Diazaspiro[4.5]decan, Pyrazolidin, 2,2-Dimethylimidazolidin, 1,4,7-Triazacyclononan, Decahydro-2,6-dimethylpyrazino[2,3-b]pyrazin, Hexahydropyridazine, Decahydro-4a,8a-dimethylpyrazino[2,3-b]pyrazin, 4,4'-Methylenebis[piperidin], 2,2'-Methylenebis[piperidin], Tetradecahydro-4,7-phenanthrolin, 2,2'-Bipiperidin, 4,4'-Bipiperidin, Tetradecahydrophenazin, Decahydrochinoxalin, 1,5-Decahydronaphthyridin, Octahydro-1H-cyclopentapyrazin, 2,2'-Bipyrrolidin, Piperazin, 2-Methylpiperazin, 2,2-Dimethylpiperazin, 2,3-Dimethylpiperazin, 2-Ethylpiperazin, 2,5-Dimethylpiperazin, 2,6-Dimethylpiperazin, 2,6-Diazabicyclo[3.3.0]octan, 3,7-Diazabicyclo[3.3.0]octan, 2,3,5,6-Tetramethylpiperazin, 2,3,5-Trimethylpiperazin, 2,2'-Bipiperidin, 2-(2-Piperidinyl)-piperazin, 2,2'-Bimorpholin, Decahydro-2,6-naphthyridin, Decahydro-2,7-naphthyridin, Homopiperazin, 2-Methylhomopiperazin, 6-Methyl-1,4-diazepan, Bis[2-(piperazin-1-yl)ethyl]amine, 1,2-Dipiperazinoethane, 1,3-Bis(4-piperidyl)propan und N-(4-piperidinylmethyl)-4-Piperidinemethanamin.

6. Zusammensetzung nach einem der vorhergehenden Ansprüche, **dadurch gekennzeichnet, dass** der mindestens eine Alkohol nur eine OH-Gruppe aufweist.

7. Zusammensetzung nach Anspruch 6, **dadurch gekennzeichnet, dass** der Alkohol ausgewählt ist aus der Gruppe bestehend aus Methanol, Ethanol, Propanol, Butanol, Benzylalkohol, substituierten Benzylalkoholen und Umsetzungsprodukten von Benzylalkohol mit Ethylenoxid oder Propylenoxid.

**8.** Zusammensetzung nach einem der vorhergehenden Ansprüche, **dadurch gekennzeichnet, dass** der Siedepunkt des Alkohols mindestens 200 °C bei 1013 mbar beträgt.

**9.** Zusammensetzung nach einem der vorhergehenden Ansprüche, **dadurch gekennzeichnet, dass** der Alkohol Benzylalkohol ist.

**10.** Zusammensetzung nach einem der vorhergehenden Ansprüche, **dadurch gekennzeichnet, dass** sie weiterhin

d) Amine, die nicht mindestens zwei sekundäre Aminogruppen als Bestandteil eines organischen Ringsystems aufweisen, und/oder
e) weitere Hilfs- oder Zusatzstoffe aufweist.

**11.** Zusammensetzung nach Anspruch 10, **dadurch gekennzeichnet, dass** die Amine d) ausgewählt sind aus

- aliphatischen Aminen,
- Oxyalkylenpolyaminen
- Cycloaliphatischen Aminen,
- Aminen mit einer cyclischen Aminogruppe und mindestens einer nichtcyclischen primären oder sekundären Aminogruppe,
- Araliphatischen Aminen,
- Aromatischen Aminen
- Addukthärtern,
- Polyamidoaminhärtern
- Mannichbasenhärtern und
- Mannichbasen.

**12.** Zusammensetzung nach einem der vorhergehenden Ansprüche, **dadurch gekennzeichnet, dass** die Zusammensetzung die Komponenten a) bis e) in den folgenden Gewichtsprozentanteilen, bezogen auf die Gesamtmasse der Zusammensetzung aufweist:

a) Epoxyharz 30 - 89 %
b) cyclisches Amin 1 - 50 %
c) Alkohol 10 - 40 %
d) weiteres Amin 0 - 59 % und
e) weitere Hilfs- oder Zusatzstoffe 0 - 59 %.

**13.** Zusammensetzung nach einem der Ansprüche 10 - 12, **dadurch gekennzeichnet, dass** der Gewichtsprozentanteil der Amine b) bezogen auf die Gesamtmasse der Amine b) und d) mindestens 10 Gew.-% beträgt,

**14.** Verfahren zur Herstellung einer Zusammensetzung nach einem der der Ansprüche 1 - 13, **dadurch gekennzeichnet, dass** mindestens ein Epoxyharz a), mindestens ein cyclisches Amin b) und mindestens ein Alkohol c) miteinander vermischt werden.

**15.** Verwendung einer Zusammensetzung nach einem der Ansprüche 1 -13 als Gießharz, Beschichtungsmasse, Komposit oder Klebstoff oder als Bestandteil davon.

## Claims

**1.** Composition comprising

a) at least one epoxy resin,
b) at least one amine having at least two secondary amino groups that are both part of an organic ring system, and
c) at least one alkyl alcohol optionally substituted by at least one aromatic radical and/or by at least one alkenyl radical,

where the contribution of the alcohol to the total concentration of OH groups is at least 1.3 mol/l.

**2.** Composition according to Claim 1,
**characterized in that**
the at least one epoxy resin is a polyepoxide based on bisphenol A diglycidyl ether, bisphenol F diglycidyl ether, 4,4'-methylenebis[N,N-bis(2,3-epoxypropyl)aniline], hexanediol diglycidyl ether, butanediol diglycidyl ether, trimethylolpropane triglycidyl ether, propane-1,2,3-triol triglycidyl ether, pentaerythritol tetraglycidyl ether and diglycidyl hexahydrophthalate.

**3.** Composition according to Claim 1 or 2,
**characterized in that**
all the secondary cyclic amino groups belong to the same cycle.

**4.** Composition according to Claim 3,
**characterized in that**
the amine has the formula (I)

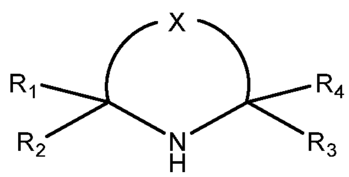

(I)

in which

- $R^1$ to $R^4$ is H or an organic radical, and
-

$$X = -(Y^1)_m-(A^1)_n-(Y^2)_o-(A^2)_p-(Y^3)_q-(A^3)_r-(Y^4)_s, \qquad (II)$$

where, independently of one another,

o m, n, o, p, q, r and s = 0 or 1,
o $A^1$, $A^2$, $A^3$ = alkylene or alkenylene radical and
o $Y^1$, $Y^2$, $Y^3$, $Y^4$ = $NR^5$, $PR^5$, O or S, with $R^5$ independently = H or organic radical,
o where any two organic radicals selected from $R^1$ to $R^5$ and any radicals present in the alkylene and/or alkenylene radicals $A^1$, $A^2$, $A^3$ may also form one or more further rings,

- with the proviso that at least one of the radicals selected from $Y^1$, $Y^2$, $Y^3$, $Y^4$ present is $NR^5$ with $R^5$ = H.

**5.** Composition according to any of the preceding claims,
**characterized in that**
the amine b) is selected from the group consisting of 3,7-diazabicyclo[4.3.0]nonane, 2,8-diazabicyclo[4.3.0]nonane, 2-phenyl-2-imidazoline, 3,8-diazabicyclo[3.2.1]octane, 2,2'-bisimidazolidine, 1H-octahydroimidazo[4,5-c]pyridine, 1,4,8-triazaspiro[4.5]decane, 1,4-diazaspiro[4.5]decane, pyrazolidine, 2,2-dimethylimidazolidine, 1,4,7-triazacyclononane, decahydro-2,6-dimethylpyrazino[2,3-b]pyrazine, hexahydropyridazine, decahydro-4a,8a-dimethylpyrazino[2,3-b]pyrazine, 4,4'-methylenebis[piperidine], 2,2'-methylenebis[piperidine], tetradecahydro-4,7-phenanthroline, 2,2'-bipiperidine, 4,4'-bipiperidine, tetradecahydrophenazine, decahydroquinoxaline, 1,5-decahydronaphthyridine, octahydro-1H-cyclopentapyrazine, 2,2'-bipyrrolidine, piperazine, 2-methylpiperazine, 2,2-dimethylpiperazine, 2,3-dimethylpiperazine, 2-ethylpiperazine, 2,5-dimethylpiperazine, 2,6-dimethylpiperazine, 2,6-diazabicyclo[3.3.0]octane, 3,7-diazabicyclo[3.3.0]octane, 2,3,5,6-tetramethylpiperazine, 2,3,5-trimethylpiperazine, 2,2'-bipiperidine, 2-(2-piperidinyl)piperazine, 2,2'-bimorpholine, decahydro-2,6-naphthyridine, decahydro-2,7-naphthyridine, homopiperazine, 2-methylhomopiperazine, 6-methyl-1,4-diazepane, bis[2-(piperazin-1-yl)ethyl]amine, 1,2-dipiperazinoethane, 1,3-bis(4-piperidyl)propane and N-(4-piperidinylmethyl)-4-piperidinemethanamine.

**6.** Composition according to any of the preceding claims,
**characterized in that**
the at least one alcohol has only one OH group.

**7.** Composition according to Claim 6,
**characterized in that**
the alcohol is selected from the group consisting of methanol, ethanol, propanol, butanol, benzyl alcohol, substituted benzyl alcohols and reaction products of benzyl alcohol with ethylene oxide or propylene oxide.

**8.** Composition according to any of the preceding claims,
**characterized in that**
the boiling point of the alcohol is at least 200°C at 1013 mbar.

**9.** Composition according to any of the preceding claims,
**characterized in that**
the alcohol is benzyl alcohol.

**10.** Composition according to any of the preceding claims,

**characterized in that** it also includes
d) amines that do not have at least two secondary amino groups as part of an organic ring system, and/or
e) further auxiliaries or additives.

**11.** Composition according to Claim 10,
**characterized in that**
the amines d) are selected from

- aliphatic amines,
- oxyalkylenepolyamines
- cycloaliphatic amines,
- amines having a cyclic amino group and at least one acyclic primary or secondary amino group,
- araliphatic amines,
- aromatic amines
- adduct hardeners,
- polyamidoamine hardeners
- Mannich base hardeners and
- Mannich bases.

**12.** Composition according to any of the preceding claims,
**characterized in that**
the composition includes components a) to e) in the following percentages by weight, based on the total mass of the composition:

a) epoxy resin 30-89%
b) cyclic amine 1-50%
c) alcohol 10-40%
d) further amine 0-59% and
e) further auxiliaries or additives 0-59%.

**13.** Composition according to any of Claims 10-12,
**characterized in that**

the percentage by weight of the amines b) based on the total mass of the amines b) and d) is at least 10% by weight.

**14.** Process for producing a composition according to any of Claims 1-13,
**characterized in that**
at least one epoxy resin a), at least one cyclic amine b) and at least one alcohol c) are mixed with one another.

**15.** Use of a composition according to any of Claims 1-13 as casting resin, coating composition, composite or adhesive or as a constituent thereof.

## Revendications

**1.** Composition comprenant

a) au moins une résine époxy,
b) au moins une amine présentant au moins deux groupes amino secondaire, qui font tous les deux partie d'un système cyclique organique et
c) au moins un alcool alkylique le cas échéant substitué par au moins un radical aromatique et/ou par au moins un radical alcényle,

la contribution de l'alcool à la concentration totale en groupes OH étant d'au moins 1,3 mole/l.

**2.** Composition selon la revendication 1, **caractérisée en ce que** ladite au moins une résine époxy est un polyépoxyde à base de bisphénol A-diglycidyléther, bisphénol F-diglycidyléther, 4,4'-méthylène-bis[N,N-bis(2,3-époxpropyl)aniline], hexanedioldiglycidyléther, butanedioldiglycidyléther, triméthylolpropanetriglycidyléther, 1,2,3-propanetrioltriglycidyléther, pentaérythritoltétraglycidyléther et ester diglycidylique de l'acide hexahydrophtalique.

**3.** Composition selon la revendication 1 ou 2, **caractérisée en ce que** tous les groupes amino cyclique secondaire appartiennent au même cycle.

**4.** Composition selon la revendication 3, **caractérisée en ce que** l'amine présente la formule (I)

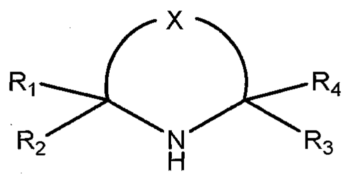
, (I)

dans laquelle

- $R^1$ à $R^4$ représentent H ou un radical organique et
-

$$X = -(Y^1)_m-(A1)_n-(Y^2)_o-(A^2)_p-(Y^3)_q-(A^3)_r(Y^4)_s, \qquad (II)$$

où, indépendamment les uns des autres,

- m, n, o, p, q, r et s = 0 ou 1,
- $A^1$, $A^2$, $A^3$ = radical alkylène ou alcénylène et
- $Y^1$, $Y^2$, $Y^3$, $Y^4$ = $NR^5$, $PR^5$, O ou S, avec $R^{5'}$ indépendamment, = H ou radical organique,
- à chaque fois deux radicaux organiques choisis parmi $R^1$ à $R^5$ et les radicaux le cas échéant présents des radicaux alkylène et/ou alcénylène $A^1$, $A^2$, $A^3$ pouvant également former un ou plusieurs autres cycles,

- à condition qu'au moins un des radicaux présents choisis parmi $Y^1$, $Y^2$, $Y^3$, $Y^4$ représente $NR^5$ avec $R^5$ = H.

**5.** Composition selon l'une des revendications précédentes, **caractérisée en ce que** l'amine b) est choisie dans le groupe constitué par le 3,7-diazabicyclo[4,3,0]nonane, le 2,8-diazabicyclo[4,3,0]nonane, la 2-phényl-2-imidazoline,

le 3,8-diazabicyclo[3,2,1]octane, la 2,2'-bisimidazolidine, la 1H-octahydro-imidazo[4,5-c]pyridine, le 1,4,8-triazaspiro[4,5]décane, le 1,4-diazaspiro[4,5]décane, la pyrazolidine, la 2,2-diméthylimidazolidine, le 1,4,7-triazacyclononane, la décahydro-2,6-diméthylpyrazino[2,3-b]pyrazine, l'hexahydropyridazine, la décahydro-4a,8a-diméthylpyrazino[2,3-b]pyrazine, la 4,4'-méthylène-bis[pipéridine], la 2,2'-méthylène-bis[pipéridine], la tétradécahydro-4,7-phénanthroline, la 2,2'-bipipéridine, la 4,4'-bipipéridine, la tétradécahydrophénazine, la décahydroquinoxaline, la 1,5-décahydronaphtyridine, l'octahydro-1H-cyclopentapyrazine, la 2,2'-bipyrrolidine, la pipérazine, la 2-méthylpipérazine, la 2,2-diméthylpipérazine, la 2,3-diméthylpipérazine, la 2-éthylpipérazine, la 2,5-diméthylpipérazine, la 2,6-diméthylpipérazine, le 2,6-diazabicyclo[3,3,0]octane, le 3,7-diazabicyclo[3,3,0]octane, la 2,3,5,6-tétraméthylpipérazine, la 2,3,5-triméthylpipérazine, la 2,2'-bipipéridine, la 2-(2-pipéridinyl)-pipérazine, la 2,2'-bimorpholine, la décahydro-2,6-naphtyridine, la décahydro-2,7-naphtyridine, l'homopipérazine, la 2-méthylhomopipérazine, le 6-méthyl-1,4-diazépane, la bis[2-(pipérazin-1-yl)éthyl]amine, le 1,2-dipipérazinoéthane, le 1,3-bis(4-pipéridyl)propane et la N-(4-pipéridinylméthyl)-4-pipéridineméthanamine.

6. Composition selon l'une des revendications précédentes, **caractérisée en ce que** ledit au moins un alcool ne présente qu'un seul groupe OH.

7. Composition selon la revendication 6, **caractérisée en ce que** l'alcool est choisi dans le groupe constitué par le méthanol, l'éthanol, le propanol, le butanol, l'alcool benzylique, les alcools benzyliques substitués et les produits de transformation de l'alcool benzylique avec de l'oxyde d'éthylène ou de l'oxyde de propylène.

8. Composition selon l'une des revendications précédentes, **caractérisée en ce que** le point d'ébullition de l'alcool est d'au moins 200°C à 1013 mbars.

9. Composition selon l'une des revendications précédentes, **caractérisée en ce que** l'alcool est l'alcool benzylique.

10. Composition selon l'une des revendications précédentes, **caractérisée en ce qu'**elle présente en outre

    d) des amines qui ne présentent pas au moins deux groupes amino secondaire comme partie d'un système cyclique organique et/ou
    e) d'autres adjuvants ou additifs.

11. Composition selon la revendication 10, **caractérisée en ce que** les amines d) sont choisies parmi

    - les amines aliphatiques,
    - les oxyalkylènepolyamines,
    - les amines cycloaliphatiques,
    - les amines présentant un groupe amino cyclique et au moins un groupe amino primaire ou secondaire non cyclique,
    - les amines araliphatiques,
    - les amines aromatiques,
    - des agents de durcissement de type produit d'addition,
    - les agents de durcissement de type polyamidoamine,
    - les agents de durcissement de type base de Mannich et
    - les bases de Mannich.

12. Composition selon l'une des revendications précédentes, **caractérisée en ce que** la composition présente les composants a) à e) aux pourcentages en poids suivants, par rapport à la masse totale de la composition :

    a) résine époxy 30-89%
    b) amine cyclique 1-50%
    c) alcool 10-40%
    d) amine supplémentaire 0-59% et
    e) autres adjuvants ou additifs 0-59%.

13. Composition selon l'une des revendications 10-12, **caractérisée en ce que** le pourcentage en poids des amines b), par rapport à la masse totale des amines b) et d), est d'au moins 10% en poids.

14. Procédé pour la préparation d'une composition selon l'une des revendications 1 à 13, **caractérisé en ce qu'**au

moins une résine époxy a), au moins une amine cyclique b) et au moins un alcool c) sont mélangés les uns avec les autres.

**15.** Utilisation d'une composition selon l'une des revendications 1 à 13 comme résine de coulée, masse de revêtement, composite ou adhésif ou comme constituant de ceux-ci.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3492269 A
- US 5470896 A
- GB 1105772 A
- EP 0083813 A1
- EP 2957584 A1
- US 5441000 A
- US 5629380 A
- WO 9609352 A1
- CN 106905816 A
- CN 106833261 A
- JP H08113876 A
- DE 1954701 A1
- CA 2165585 A1
- US 3055901 A
- EP 0969030 A1
- US 4775734 A
- EP 3255078 A1
- US 8951619 B2
- US 9006385 B2
- WO 2017074810 A1
- EP 18172950
- EP 18172954
- US 20120010330 A1
- EP 1047740 A1
- EP 675185 A2


### In der Beschreibung aufgeführte Nicht-Patentliteratur


- **A. M. PAQUIN.** Epoxidverbindungen und Epoxidharze. Springer Verlag, 1958
- **LEE NEVILLE.** Handbook of Epoxy Resins. 1967